# EUROPÄISCHE PATENTANMELDUNG

(11) **EP 1 806 896 A1**
(43) Veröffentlichungstag der Anmeldung: **11.07.2007**
(21) Anmeldenummer: 06000350.6
(22) Anmeldetag: 10.01.2006
(51) Int. Cl.: H04L 29/06

(54) **Verfahren zur Auswahl und Darstellung einer Zusatzinformation**

(71) Anmelder: HURRA Communications GmbH, 70599 Stuttgart (DE)
(72) Erfinder: Schweier, René, 70599 Stuttgart (DE)
(74) Vertreter: Wörz, Volker Alfred

(57) **Zusammenfassung**

Um die Auswahl, Übermittlung und Darstellung einer Zusatzinformation von einem Server an einen Client, an den ein Datenstrom übertragen wird, derart zu verbessern, dass eine Reduzierung der Belastung des Kommunikationsnetzwerks möglich ist, wird vorgeschlagen, dass eine Position bezüglich des Datenstroms bestimmt wird, ein dem Client zugeordnetes Profil ausgewertet wird, in Abhängigkeit von der Auswertung des Profils die Zusatzinformation ausgewählt wird und der Datenstrom derart von dem Client verarbeitet wird, dass die ausgewählte Zusatzinformation in Abhängigkeit von der bestimmten Position dargestellt wird.

## Beschreibung

Die Erfindung betrifft ein Verfahren zur Auswahl und Darstellung mindestens einer Zusatzinformation in Abhängigkeit von einem von einem Server an einen Client übermittelbaren Datenstrom.

Die Erfindung betrifft auch ein Client-Server-System, das einen mit einem Kommunikationsnetzwerk verbundenen Client und einen mit dem Kommunikationsnetzwerk verbundenen Server umfasst.

Die Erfindung betrifft ferner ein Computerprogramm, das auf einem Client-Server-System ablauffähig ist.

Es ist bekannt, einen von einem Server an einen Client übermittelten Datenstrom mit Zusatzinformationen zu versehen. Ein derartiger Datenstrom beschreibt beispielsweise ein über ein Kommunikationsnetzwerk übermitteltes Hörfunkprogramm, beispielsweise ein sogenanntes Internet-Radio, wobei die mittels des Datenstroms übertragenen Daten beispielsweise gemäß des sogenannten mp3-Standards formatiert sind. Eine Zusatzinformation kann hierbei beispielsweise eine aktuelle Nachricht sein. Für die Darstellung der Nachricht wird diese in den das Hörfunkprogramm realisierenden Datenstrom eingespeist, beispielsweise durch eine Unterbrechung eines aktuell übertragenen Musiktitels.

Es ist ferner bekannt, ein oder mehrere Fernsehprogramme über das Internet zu übertragen. Hierbei wird ein die Videoinformation umfassender Datenstrom von einem Server an den Client übermittelt. Werden beispielsweise die Videodaten eines Spielfilms übertragen, so ist es bekannt, Werbeblöcke vorzusehen, so dass zu fest vorgegebenen Zeiten eine Unterbrechung des Spielfilms erfolgt und ein oder mehrere sogenannte Werbeclips eingefügt werden. Dies geschieht analog zu beispielsweise über das Kabelnetz oder über Satellit übertragenen Fernsehprogrammen. Hierbei kann sowohl jeder einzelne Werbeclip als auch ein aus mehreren Werbeclips bestehender Werbeblock als eine Zusatzinformation betrachtet werden.

Ferner ist es bekannt ein TV-Programm für die Übermittlung einer aktuellen Nachricht, beispielsweise einer Katastrophenmeldung, zu unterbrechen. Wird das TV-Programm in Form eines Datenstroms in einem geeigneten Format, beispielsweise als sogenannte mpeg-Datei, von einem Server an einen Client mittels eines Kommunikationsnetzwerks übertragen, so wird die Nachricht als Teil des TV-Programms ebenfalls mittels des Datenstroms an den Client übertragen.

Eine Zusatzinformation kann jede Art von Information sein, die an den Client übermittelt wird, jedoch von dem Client nicht explizit angefordert wurde.

Die Übertragung von Datenströmen über ein Kommunikationsnetzwerk wie beispielsweise das Internet oder das mobile Kommunikationsnetzwerk WLAN (wireless local area network) wird in naher Zukunft weiterhin stark ansteigen, was zu einer starken Belastung der Kommunikationsnetzwerke führt.

Insbesondere werden zunehmend jegliche Art von Informationen über Kommunikationsnetzwerke und insbesondere das Internet übermittelt. Um eine bestimmte Information zu finden, wird diese häufig mittels sogenannter Suchmaschinen - eine spezialisierte Art von Servern innerhalb eines Kommunikationsnetzwerks - gesucht. Hierfür werden üblicherweise eine Vielzahl von sogenannten Netzwerkseiten von einem oder mehreren Informationsservern, die den Suchmaschinen zugeordnet sind, an den Client übertragen, bis dieser die gewünschte Information gefunden hat. Dies bedeutet einerseits eine Belastung der beteiligten Informationsserver bzw. Suchmaschinen und andererseits eine Belastung des Kommunikationsnetzwerks.

Beispielsweise werden heutzutage Produkte, also Waren, Dienstleistungen und Informationen, von sogenannten Online-Shops angeboten und von Benutzern bzw. Kunden bei den Online-Shops gekauft. Die für einen Kauf eines Produkts bei einem Online-Shop zwischen einem Benutzer, bzw. einem dem Benutzer zugeordneten Client, und dem Online-Shop, bzw. einem oder mehreren dem Online-Shop zugeordneten Servern, zu übermittelnden Daten erzeugen einen signifikanten Anteil der insgesamt über ein Kommunikationsnetzwerk, also beispielsweise das Internet, zu übertragenden Daten. Hierzu muss insbesondere auch die Suche und Anforderung von Informationen gerechnet werden, die schließlich zu der Bestellung bzw. dem Kauf eines Produkts führen.

Die stetig steigende Anzahl der zugriffe auf Suchmaschinen und Produktsuchmaschinen zeigt, dass die Benutzer häufig ganz spezielle Informationen bzw. ganz spezielle Produkte suchen. Um die Menge der über das Kommunikationsnetzwerk zu übertragenden Daten zu reduzieren, existieren beispielsweise sogenannte Meta-Suchmaschinen, die ihrerseits bei Vorliegen einer Anfrage von einem Client mittels eines Suchbegriffs gezielte Anfragen an Suchmaschinen richten, die Ergebnisse bewerten und eine Liste der bewerteten Ergebnisse an den Client übermitteln, um die Trefferwahrscheinlichkeit zu erhöhen und somit die Anzahl von ergebnislosen Suchvorgängen zu reduzieren, so dass eine Verschwendung der Ressourcen des Kommunikationsnetzwerks durch unnötige Datenübertragung reduziert wird.

Um das stetig ansteigende Volumen der über das Internet übermittelten Informationen und insbesondere Datenströme zu beherrschen, werden eine Vielzahl weiterer Techniken eingesetzt. Beispielsweise werden Kommunikationsnetze als Teil des Internets eingesetzt, die erhöhte Bandbreiten aufweisen. Ferner werden Kompressionsalgorithmen entwickelt und eingesetzt, mittels derer die Volumen der über die Kommunikationsnetzwerke zu übertragenden Datenströme reduziert werden können.

Es ist auch bekannt, Datenströme auf bestimmten Servern zwischenzuspeichern (sogenannter Proxy-Server oder Cache-Server). Eine Anforderung des Datenstroms wird dann von einem möglichst gering belasteten Server oder einem Server in einen möglichst gering belasteten Teil des Kommunikationsnetzwerks erfüllt, der den Datenstrom zwischengespeichert hat. Dies hat den Nachteil, dass der Datenstrom und insbesondere die darin enthaltenen Zusatzinformationen häufig nicht mehr aktuell sind.

Es ist deshalb Aufgabe der Erfindung, die Auswahl, Übermittlung und Darstellung einer Zusatzinformation an einen Client, an den ein Datenstrom übertragen wird, derart zu verbessern, dass insgesamt eine Reduzierung der Belastung des Kommunikationsnetzwerks möglich ist.

Die Aufgabe wird durch ein Verfahren der eingangs genannten Art dadurch gelöst, dass ein dem Client oder einem Benutzer des Clients zugeordnetes Profil ausgewertet wird, in Abhängigkeit von der Auswertung des Profils die mindestens eine Zusatzinformation ausgewählt wird und der Datenstrom derart von dem Client verarbeitet wird, dass die ausgewählte Zusatzinformation in Abhängigkeit von der bestimmten Position dargestellt wird.

Dieses Verfahren hat den Vorteil, dass die Zusatzinformation in Abhängigkeit eines Profils das dem Benutzer bzw. dem Client zugeordnet ist, ausgewählt wird. Damit wird folglich die Zusatzinformation in Abhängigkeit von dem Client bzw. dem Benutzer des Clients ausgewählt. Dies ermöglicht es, Informationen, die an breite Massen gerichtet sind und mittels eines Datenstroms übertragen werden, also beispielsweise Internet-Fernsehen oder Internet-Radio, zu übertragen und dennoch eine individuelle bzw. personalisierte Zusatzinformation bei der Darstellung des Datenstroms an den bestimmten Positionen darzustellen. Dadurch, dass diese Zusatzinformation personalisiert ist, wird eine besonders hohe Relevanz der Information erreicht. Dies führt dazu, dass der Benutzer eine derartige Information nicht selbst anfordern muss. Das automatisierte, zielgerichtete Übermitteln von Zusatzinformationen ermöglicht damit eine Verringerung der Gesamtheit der über das Kommunikationsnetzwerk zu übertragenden Daten.

Ein Verarbeiten des Datenstroms geschieht beispielsweise durch Decodieren und Darstellen des decodierten Datenstroms. Eine Datenstrom kann beispielsweise in einem sogenannten mpeg-Format, mp3-Format oder .wav-Format codiert sein. Die Zusatzinformation kann in demselben Format des Datenstroms oder auch in einem anderen Format codiert sein. Eine Verarbeitung der Zusatzinformation bedeutet hierbei eine Decodierung und Darstellung der Zusatzinformation, so dass sie von einem Benutzer des Clients wahrgenommen werden kann.

Gemäß einer vorteilhaften Ausführungsform des erfindungsgemäßen Verfahrens wird vor oder während der Übermittlung des Datenstroms an den Client die Zusatzinformation ausgewählt, die Position bestimmt, die ausgewählte Zusatzinformation in die bestimmte Position bezüglich des Datenstroms eingefügt und der Datenstrom an den Client übertragen. Dies hat den Vorteil, dass die personalisierte Zusatzinformation besonders bequem an den Client übertragen werden kann, da sie bereits von dem Server in den Datenstrom integriert wird.

Gemäß anderer vorteilhafter Ausführungsformen wird der Datenstrom in Form einer Datei von einem Server heruntergeladen und vor der Verarbeitung zwischengespeichert. Datenströme, beispielsweise Musikdateien oder Videodateien, werden häufig zunächst von einem Server mittels eines Clients heruntergeladen und auf dem Client abgespeichert. Zu einem späteren Zeitpunkt werden diese Datenströme dann dadurch verarbeitet, dass beispielsweise der durch diese Daten realisierte Video bzw. die durch diese Daten realisierte Musik abgespielt wird. Hierbei bestehen mehrere vorteilhafte Alternativen für die Auswahl der Zusatzinformation und die Bestimmung der Position.

Gemäß einer ersten Alternative wird vor der Übermittlung des Datenstroms die Zusatzinformation ausgewählt und der vorgesehenen Position zugewiesen. Die Zusatzinformation wird hierbei entweder bereits in den Datenstrom in die vorgesehene Position eingefügt, als separate Datei übermittelt und abgespeichert oder auf einem speziellen Informationsserver zum Abruf zwischengespeichert. Dies ermöglicht eine besonders kompakte Realisierung des Verfahrens, da die Auswahl der Zusatzinformation bereits bei der Anforderung des Datenstroms durchgeführt wird.

Gemäß einer anderen Alternative wird vor der Übermittlung des Datenstroms die Position ermittelt und die Zusatzinformation erst während der Verarbeitung des Datenstroms ausgewählt und an den Client übermittelt. Hierbei wird beispielsweise während des Betrachtens eines einen Video realisierenden Datenstroms die Zusatzinformation ausgewählt und an der entsprechenden Position in den Datenstrom eingefügt. Dies ermöglicht eine besonders hohe Aktualität der Zusatzinformation, unabhängig von dem Zeitraum, der zwischen der Übermittlung des Datenstroms und der Verarbeitung des zwischengespeicherten Datenstroms vergeht. Insbesondere kann bei mehrmaligem Verarbeiten der Dateien, also beispielsweise bei mehrmaligem Anhören eines Musikstücks oder bei mehrmaligem Ansehen eines Videos, stets eine andere, möglichst aktuelle Zusatzinformation ausgewählt und an den Client übertragen werden.

Gemäß einer nochmals anderen Alternative wird vor der Übermittlung des Datenstroms die Zusatzinformation ausgewählt und die Position erst während der Verarbeitung des Datenstroms bestimmt. Hierbei kann beispielsweise erreicht werden, dass die Zusatzinformation in Abhängigkeit von Eigenschaften der tatsächlichen Bearbeitung angezeigt wird. Beispielsweise kann vorgesehen sein, dass die Position in Abhängigkeit von einer bereits erfolgten Dauer der Verarbeitung ermittelt wird. Damit kann eine besonders flexible Ermittlung der Position erreicht werden.

Gemäß einer weiteren Alternative erfolgt während der Verarbeitung des Datenstroms durch den Client die Bestimmung der Position und die Auswahl und Übermittlung der Zusatzinformation an den Client. Damit kann einerseits eine besonders hohe Aktualität der Zusatzinformation erreicht werden und andererseits die Position in Abhängigkeit von Eigenschaften der Verarbeitung des Datenstroms bestimmt werden.

Vorzugsweise wird Zusatzinformation ausgewählt in Abhängigkeit von einer Eigenschaft des Datenstroms, einer Bewertung der zur Auswahl stehenden Zusatzinformationen, einer Eigenschaft der bestimmten Position oder einer aktuellen Tageszeit oder Jahreszeit. Insbesondere werden hierbei mehrere dieser Kriterien zur Auswahl der Zusatzinformation verwendet. Eine Eigenschaft des Datenstroms ist beispielsweise die Art der durch den Datenstrom realisierten Daten oder das Dateiformat.

Realisiert der Datenstrom beispielsweise mehrere Musikstücke, so kann die Zusatzinformation besonders gut zwischen einzelnen Musikstücken integriert werden. Ist die Zusatzinformation beispielsweise eine Information bezüglich eines über einen Online-Shop bestellbaren Produkts, so kann die Zusatzinformation einer bestimmten Produktklasse zugeordnet werden.

Realisiert der Datenstrom beispielsweise einen Video, so kann eine Position für die Darstellung der Zusatzinformation derart bestimmt werden, dass die Zusatzinformation dargestellt wird, während, nachdem oder vor einer Szene, in der ein Produkt derselben Produktklasse dargestellt wird. Fährt beispielsweise in dem Video ein Darsteller ein Fahrzeug eines bestimmten Typs und ergibt das Benutzerprofil, dass der Benutzer ein prinzipielles Interesse an Kraftfahrzeugen hat oder sich gar mit dem Gedanken des Kaufs eines Fahrzeugs trägt, so kann eine Werbung eines Autohauses, das ein derartiges Fahrzeug gegenwärtig anbietet, sehr relevant für den Benutzer sein. Insbesondere kann hierbei beispielsweise aus dem Benutzerprofil erkannt werden, an welchem Ort der Benutzer wohnt und somit das Angebot eines Autohauses in erreichbarer Nähe dargestellt werden.

Es kann ferner vorgesehen sein, die zur Auswahl stehenden Zusatzinformationen zu bewerten. Dies kann anhand einer allgemeinen Relevanz geschehen. Beispielsweise können Katastrophenmeldungen eine besonders hohe Bewertung erhalten. Es ist ferner vorstellbar, eine Zusatzinformation dahingehend zu bewerten, wie häufig diese Zusatzinformation nach einer Darstellung eine bestimmte Reaktion durch den Benutzer, dem diese Zusatzinformation dargestellt wurde, ausgelöst hat. Beschreibt die Zusatzinformation beispielsweise ein von einem Ladengeschäft oder einem Online-Shop zum Kauf angebotenes Produkt, so kann diese Zusatzinformation besonders hoch bewertet werden, dieses Produkt besonders häufig gekauft wurde. Damit kann folglich eine nochmalige Steigerung der Relevanz der dargestellten Zusatzinformationen erreicht werden.

Durch Berücksichtigung der Position der darzustellenden Zusatzinformation kann eine besonders hohe Wahrscheinlichkeit der Kenntnisnahme durch den Benutzer erreicht werden. Befindet sich die Position für die Darstellung der Zusatzinformation beispielsweise am Anfang oder Ende des Datenstroms, so kann vorgesehen sein, allgemeine Zusatzinformationen darzustellen, während für Positionen innerhalb des Datenstroms nur Information mit Bezug zu dem Inhalt des Datenstroms dargestellt werden.

Durch Berücksichtigung der aktuellen Zeit kann eine besonders hohe Relevanz der darzustellenden Zusatzinformation erreicht werden. Beispielsweise kann während der Mittagszeit eingeblendet werden, wo es in der Nähe besonders günstig Mittagessen gibt. Abends hingegen können Freizeitangebote dargestellt werden.

Vorteilhafterweise wird die Position bestimmt in Abhängigkeit von dem Profil, einer Aktion des Benutzers, einer Eigenschaft des Datenstroms, einer Eigenschaft der ausgewählten Zusatzinformation und/oder einer aktuellen Tageszeit oder Jahreszeit. Eine Aktion des Benutzers kann beispielsweise das Einlegen einer Pause in der Verarbeitung des Datenstroms sein. Innerhalb einer derartigen Pause kann dann eine Zusatzinformation ausgewählt und eingeblendet oder eine bereits ausgewählte Zusatzinformation dargestellt werden. Eine Eigenschaft der ausgewählten Zusatzinformation kann beispielsweise den Inhalt der Zusatzinformation oder eine Inhaltsklasse beschreiben. So kann beispielsweise erreicht werden, dass eine Zusatzinformation, die anspruchsvolle aktuelle Nachrichten bezüglich eines Tagesgeschehens beschreibt, zu Beginn der Verarbeitung des Datenstroms dargestellt wird, während eine Zusatzinformation, die eine Übersicht über weitere anforderbaren Datenströme beschreibt, am Ende der Verarbeitung dargestellt wird. Durch eine Berücksichtigung der aktuellen Zeit kann ferner erreicht werden, dass eine bestimmte Zusatzinformation zu einer bestimmten Tageszeit dargestellt wird.

Vorzugsweise enthält das Benutzerprofil eine Profilinformation bezüglich
- einer Eigenschaft eines angeforderten oder übermittelten Datenstroms,
- eines bestellten oder gekauften Produkts,
- eines nicht gekauften Produkts,
- des Kaufverhaltens des Benutzers bei einem Ohline-Shop,
- mindestens eines dem Benutzer zugeordneten personenbezogenen Datums,
- mindestens eines von dem Benutzer oder von dem dem Benutzer zugeordneten Client an eine Suchmaschine oder eine Produktsuchmaschine übermittelten Suchbegriffs
- des Verhaltens des Benutzers bezüglich mindestens einer diesem dargestellten Zusatzinformation.

Eine Eigenschaft des übermittelten Datenstroms kann beispielsweise der Typ der realisierten Informationen sein oder einen Inhalt beschreiben. In Abhängigkeit hiervon können Zusatzinformationen ausgewählt werden, die ähnliche Datenströme beschreiben. Realisiert der Datenstrom beispielsweise einen einem bestimmten Genre angehörenden Spielfilm, so kann Zusatzinformation ausgewählt werden, die zukünftig erscheinende Kinofilme desselben Genres beschreibt oder ein Buch mit Hintergrundinformationen zu dem Spielfilm zum Kauf anbietet. Realisiert der Datenstrom eine Musikdatei und gehört diese dem Genre der Country-Musik an, so kann vorgesehen sein, dass dem Benutzer Zusatzinformationen bezüglich einer Reise nach den USA dargestellt werden.

Insbesondere wenn die Zusatzinformation eine Produktinformation ist, kann eine Profilinformation, die ein bereits bestelltes oder gekauftes Produkt beschreibt, dazu herangezogen werden, derartige Produkte dem Benutzer nicht nochmals zum Kauf anzubieten. Ebenso kann eine Profilinformation bezüglich eines nicht gekauften Produkts herangezogen werden, um ein vergleichbares Produkt anzubieten.

Profilinformationen bezüglich des Kaufverhaltens des Benutzers bei einem Ladengeschäft oder einem Online-Shop kann beispielsweise darüber Aufschluss geben, ob der Benutzer besonders hochpreisige Produkte bevorzugt oder häufig Produkte einer bestimmten Produktklasse, beispielsweise Bücher, kauft.

Eine Profilinformation, die mindestens einen Suchbegriff beschreibt, kann besonders deutlich ein Interesse des Benutzers darstellen. Damit können besonders relevante Zusatzinformationen ausgewählt werden.

Eine Profilinformation bezüglich eines dem Benutzer zugeordneten Datums, beispielsweise des Alters, Geschlechts, Wohnorts, Berufs, Hobbys oder weiterer Interessen kann besonders gut für die Auswahl von relevanter Zusatzinformation herangezogen werden.

Eine Profilinformation bezüglich des Verhaltens des Benutzers bezüglich einer diesem dargestellten Zusatzinformation kann beispielsweise angeben, ob der Benutzer eine in den Datenstrom integrierte Zusatzinformation beispielsweise durch Vorspulen überspringt und folglich an dieser Zusatzinformation nicht interessiert ist. Im folgenden kann dann vorgesehen sein, dass eine Zusatzinformation derselben Klasse nicht mehr ausgewählt und angezeigt wird, da diese mit hoher Wahrscheinlichkeit nicht relevant war.

In einer besonders bevorzugten Ausführungsform des erfindungsgemäßen Verfahrens, bei dem der Datenstrom Videodaten umfasst
- wird bei der Darstellung der Videodaten die Zusatzinformation überlagernd dargestellt,
- wird die Darstellung der Videodaten an der bestimmten Position unterbrochen und es erfolgt dort eine Darstellung der Zusatzinformation oder
- wird die Zusatzinformation auf einem separaten Medium dargestellt.

Eine überlagernde Zusatzinformation kann beispielsweise als eingeblendeter Text oder Fließtext in einer Art Kopf- bzw. Fuß-Zeile dargestellt werden. Ferner kann mittels überlagernder Audiodateien der Ton durch die Zusatzinformation überlagert werden. Insbesondere ist es auch vorstellbar, eine Video-Zusatzinformation in einem bestimmten Bereich des Bildschirms darzustellen und diese beispielsweise auszublenden, wenn eine entsprechende Aktivität des Benutzers, beispielsweise die Betätigung einer bestimmten Schaltfläche, erfolgt.

Die Darstellung der Zusatzinformation auf einem separaten Medium kann hierbei auf einer separaten Hardware oder einer separaten Software erfolgen. Eine separate Hardware ist beispielsweise ein Display eines mobilen Telekommunikationsgeräts, das im Besitz des Benutzers ist. Eine separate Software kann beispielsweise ein sogenanntes Browserfenster sein, das geöffnet wird, während der Datenstrom in einem anderen Browserfenster, einem sogenannten Videoplayer oder einem sonstigen Mediaplayer, beispielsweise mittels eines Personal Computers, dargestellt wird.

Gemäß einer anderen bevorzugten Ausführungsform, bei der der Datenstrom Musikdaten umfasst, wird die Zusatzinformation vor oder nach einem Musiktitel eingeblendet, wobei der Musiktitel in Abhängigkeit von dem Benutzerprofil oder in Abhängigkeit von einer Eigenschaft der Zusatzinformation ausgewählt wird. Hierbei kann eine Abhängigkeit einer Zusatzinformation zu einem bestimmten Musiktitel, beispielsweise einem Thema oder Genre, berücksichtigt werden. Die Zusatzinformation kann beispielsweise als Musikdaten, Sprachdaten oder als eingeblendete Textdaten dargestellt werden.

Besonders vorteilhaft ist es, wenn der Datenstrom über das Internet übertragen wird. Ein derartiger Datenstrom kann beispielsweise das sogenannte Internet-Radio, Internet-TV oder eine Internet-Telefonie (VoIP) beschreiben. Insbesondere im Bereich des Internets werden zunehmend mehr Datenströme übertragen und sind deshalb die erfindungsgemäßen Vorteile besonders signifikant.

Umfasst der Datenstrom die im Zuge des Aufbaus oder Abbaus einer Internet-Telefonie-Verbindung oder die während einer aufgebauten Internet-Telefonie-Verbindung zwischen den Gesprächspartnern übertragenen Gesprächsdaten, so ist es besonders vorteilhaft, wenn die Zusatzinformation in Abhängigkeit des dem jeweiligen Empfänger des Datenstroms zugeordneten Benutzerprofils ausgewählt wird. Es wird folglich beiden Gesprächspartnern eine jeweils personalisierte Zusatzinformation dargestellt. Diese kann beispielsweise bei dem Aufbau der Gesprächsverbindung dargestellt werden.

Insbesondere vorteilhaft kann dieses Verfahren auch angewendet werden, wenn ein derartiges Telefongespräch aufgezeichnet wird, weil ein Gesprächspartner nicht erreichbar ist. Hier kann zusätzlich zu der aufgezeichneten Nachricht eine Zusatzinformation an den Empfänger übermittelt werden und zusammen mit der Nachricht abgespeichert werden.

Besonders vorteilhaft ist es, wenn eine Reaktion des Benutzers oder des Clients auf die Zusatzinformation erfasst wird und in Abhängigkeit von einer Auswertung der Reaktion eine Bewertung der Zusatzinformation durchgeführt wird. Wird der Datenstrom beispielsweise mittels eines Browsers dargestellt, so kann vorgesehen sein, dass die Zusatzinformation beispielsweise einen sogenannten Link enthält. Durch eine Aktivierung des Links, beispielsweise mittels eines geeigneten Zeigegeräts, kann der Server veranlasst werden, weitere Zusatzinformationen, die beispielsweise thematisch mit der aktivierten Zusatzinformation in Verbindung stehen, an den Client zu übermitteln. Wird eine Zusatzinformation besonders häufig von einem Benutzer oder von mehreren Benutzern aktiviert, so kann diese Zusatzinformation besonders hoch bewertet werden, sodass diese besonders häufig beispielsweise auch anderen Benutzern angezeigt wird, da davon ausgegangen werden kann, dass diese Zusatzinformation auch für weitere Benutzer von hoher Relevanz ist. Hierbei wird folglich die Zusatzinformation zusätzlich in Abhängigkeit von einer der Zusatzinformation zugeordneten Bewertung ausgewählt.

Vorzugsweise wird eine Reaktion des Benutzers oder des Clients auf die Zusatzinformation erfasst und in Abhängigkeit von einer Auswertung der Reaktion eine Aktualisierung des Benutzerprofils durchgeführt. Beispielsweise kann bei einer Aktivierung der Zusatzinformation das Benutzerprofil dahingehend geändert werden, dass ein prinzipielles Interesse des Benutzers an derartigen Zusatzinformationen hinterlegt wird. Erfolgt keine Reaktion des Benutzers, kann das Benutzerprofil auch dahingehend geändert werden, dass keine Zusatzinformation beispielsweise derselben Klasse mehr angezeigt wird.

Die Aufgabe wird auch durch ein Client-Server-System der eingangs genannten Art dadurch gelöst, dass das Client-Server-System Mittel zur Durchführung des erfindungsgemäßen Verfahrens aufweist.

Von besonderer Bedeutung ist die Realisierung dieser Erfindung in Form eines Computerprogramms. Dabei ist das Computerprogramm auf mindestens einem Rechengerät bzw. einem Computer, insbesondere auf einem Client oder einem Server ablauffähig und zur Ausführung des erfindungsgemäßen Verfahrens programmiert. Insbesondere können zur Ausführung des erfindungsgemäßen Verfahrens Teile des Computerprogramms auf unterschiedlichen Computern ablaufen. Die Erfindung wird also durch das Computerprogramm realisiert, so dass dieses Computerprogramm in gleicher weise die Erfindung darstellt wie das Verfahren, zu dessen Ausführung das Computerprogramm geeignet ist.

Das Computerprogramm ist vorzugsweise auf einem Speicherelement abgespeichert. Ein Speicherelement kann insbesondere ein Random-Access-Memory, ein Read-Only-Memory oder ein Flash-Memory sein.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Es zeigen:
- Fig. 1: ein Client-Server-System gemäß einer ersten Ausführungsform;
- Fig. 2: ein Ablaufdiagramm des erfindungsgemäßen Verfahrens in einer ersten Ausführungsform;
- Fig. 3: ein Ablaufdiagramm des erfindungsgemäßen Verfahrens in einer zweiten Ausführungsform;
- Fig. 4: ein Client-Server-System in einer zweiten Ausführungsform und
- Fig. 5: ein Ablaufdiagramm des erfindungsgemäßen Verfahrens gemäß einer dritten Ausführungsform.

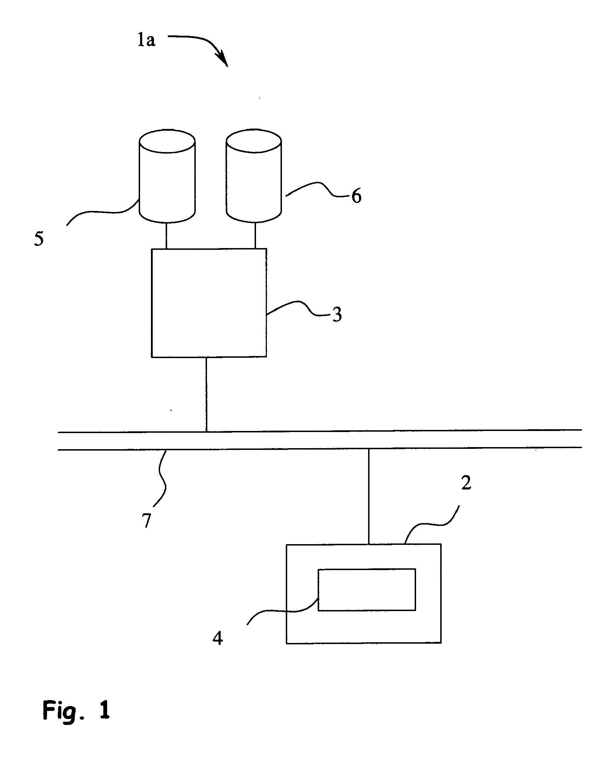

In Fig. 1 ist ein Client-Server-System 1a dargestellt, das einen Client 2 und einen Server 3 aufweist. Auf dem Client 2 läuft eine Software 4 ab, die beispielsweise als ein Browser realisiert sein kann. Die Software 4 kann aber auch jedes andere Programm zur Verarbeitung eines Datenstroms, beispielsweise ein Programm zur Betrachtung von Videos oder zur Ausgabe von Musikdaten, sein.

Dem Server 3 sind eine Profildatenbank 5 und eine Zusatzinformationsdatenbank 6 zugeordnet. Auf der Profildatenbank 5 sind Benutzerprofile von Benutzern abgespeichert, die einem Client 2 zugeordnet werden können. Auf der Zusatzinformationsdatenbank 6 sind eine Mehrzahl von Zusatzinformationen abgespeichert, die beispielsweise unter Benutzung einer spezialisierten Abfragesprache ausgewählt und abgefragt werden können.

Der Client 2 und der Server 3 sind an ein Kommunikationsnetzwerk, beispielsweise das Internet 7, angeschlossen. Das Kommunikationsnetzwerk könnte beispielsweise auch ein kabelloses Telekommunikationsnetzwerk oder ein WLAN (Wireless Local Area Network) sein.

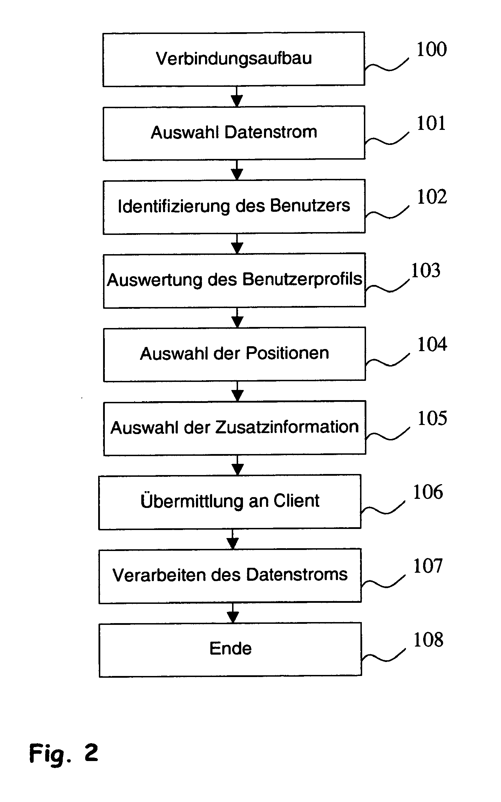

In Fig. 2 ist ein schematisiertes Ablaufdiagramm einer möglichen Ausführungsform des erfindungsgemäßen Verfahrens dargestellt, wie es beispielsweise auf dem Client-Server-System 1a ausgeführt werden könnte.

Das Verfahren beginnt in einem Schritt 100, in dem eine Verbindung zwischen dem Client 2 und dem Server 3 über ein Kommunikationsnetzwerk, beispielsweise das Internet 7, aufgebaut wird. Unter einer Verbindung soll im Folgenden nicht lediglich ein leitungsvermittelter Dienst, sondern insbesondere auch ein paketvermittelter Dienst verstanden werden. Dies bedeutet, dass bereits in dem Senden einer Anfrage von dem Client 2 an den Server 3 zur Übermittlung eines Datenstroms eine Verbindung gesehen werden soll, selbst wenn diese Anfrage von dem Server 3 nicht beantwortet werden würde. Somit kann jede zielgerichtete Übermittlung von Daten von einem Client 2 an einen Server 3 oder von einem Server 3 an einen Client 2 als Verbindungsaufbau bzw. als Datenübermittlung, die Teil einer aufgebauten Verbindung ist, aufgefasst werden.

In dem Schritt 100 wird beispielsweise durch einen nicht dargestellten Benutzer des Clients 2 von dem Server 3 eine Netzwerkseite, beispielsweise eine sogenannte web-page, mit Informationen durch die Eingabe einer dem Server 3 zugeordneten URL (Uniform Resource Locator) in die Software 4, beispielsweise den Browser, angefordert.

Der Server 3 kann beispielsweise mehrere sogenannte Video-Streams zum Abruf bereithalten. Zur Auswahl eines derartigen Video-Streams wird von dem Server 3 beispielsweise eine Übersicht über die anforderbaren Video-Streams in Form einer Netzwerkseite an den Client 2 über das Kommunikationsnetzwerk übermittelt.

In einem Schritt 101 wählt der Benutzer mittels des Clients 2 einen Video-Stream aus. Dies kann beispielsweise durch Aktivieren eines Links erfolgen, der dem ausgewählten Video-Stream zugeordnet ist und auf der von dem Server 3 an den Client 2 übermittelten Netzwerkseite dargestellt ist.

In einem Schritt 102 erfolgt eine Identifizierung des Benutzers durch den Server 3. Hierzu kann beispielsweise ein auf den Client 2 abgelegtes Cookie automatisch von dem Client 2 an den Server 3 übermittelt und von diesem ausgewertet werden. Es ist ferner vorstellbar, dass eine Identifizierung des Benutzers dadurch erfolgt, dass dieser sich in dem Schritt 100 oder in dem Schritt 101 bei dem Server 3 durch Eingabe einer Kennung identifiziert. Hierbei kann der Benutzer bzw. der Client 2 bereits früher bei dem Server 3 registriert worden sein.

In einem Schritt 103 wird ein dem identifizierten Benutzer zugeordnetes Benutzerprofil aus der Profildatenbank 5 ausgelesen und dahingehend ausgewertet, dass ein aktuelles Interesse des Benutzers erkannt wird. Ein aktuelles Interesse kann beispielsweise der bevorstehende Kauf eines bestimmten Produkts sein. Derartige Informationen können durch eine Reihe weiterer Server, die ebenfalls mit dem Kommunikationsnetzwerk oder einem anderen Kommunikationsnetzwerk mit dem Client 2 verbunden sind bzw. verbindbar sind, ermittelt werden.

Beispielsweise kann ein derartiger Server eine Suchmaschine sein, bei der der Benutzer mittels des Clients 2 oder mittels eines anderen Clients durch die Eingabe eines Suchbegriffs, beispielsweise die Umschreibung eines Produkts, nähere Informationen zu dem Produkt angefordert hat. Der weitere Server kann ferner auch als Online-Shop ausgebildet sein, bei dem der Benutzer ein Produkt beispielsweise bereits ausgewählt und in den Warenkorb gelegt hat, das Produkt selbst jedoch nicht gekauft hat.

Dadurch, dass derartige Profilinformationen von möglichst vielen weiteren Servern ermittelt werden und dem Benutzerprofil zugeordnet werden, kann zu jedem Zeitpunkt ein hochaktuelles Benutzerprofil ausgewertet werden, so dass ein aktuelles Interesse des Benutzers möglichst genau erkannt werden und somit stets eine möglichst hochrelevante Zusatzinformation ausgewählt werden kann.

In einem Schritt 104 wird eine oder werden mehrere Positionen innerhalb des Datenstroms, in vorliegendem Beispiel also des Video-Streams, automatisch ausgewählt.

Eine derartige Auswahl kann nach unterschiedlichen Kriterien erfolgen. Beispielsweise kann vorgesehen sein, die Positionen derart auszuwählen, dass bei der Verarbeitung des Datenstroms, also beispielsweise bei einer Ansicht des Videos, in bestimmten Zeitabständen eine derartige Position vorgesehen wird. Es ist ferner möglich, den Inhalt des Videos bzw. einzelne Szenen derartig zu klassifizieren, dass beispielsweise vor oder nach möglichst spannenden Szenen oder Szenen eines bestimmten Inhalts eine Position ausgewählt wird.

In einem Schritt 105 wird automatisch eine Zusatzinformation ausgewählt. Diese kann in Abhängigkeit der ausgewählten Position, in der diese Zusatzinformation dargestellt werden soll, sowie in Abhängigkeit der Auswertung des Benutzerprofils ausgewählt werden. Interessiert sich der Benutzer beispielsweise für den Kauf eines bestimmten Produkts, so kann an einer Position des Videos, in der ein vergleichbares Produkt, beispielsweise ein bestimmtes Kraftfahrzeug, als Teil des Videos dargestellt wird, eine Unterbrechung erfolgen und als Zusatzinformation ein besonders günstiger Anbieter dieses Produkts dem Benutzer angezeigt werden. Die Zusatzinformation kann ferner in Abhängigkeit von einer Bewertung der zur Auswahl stehenden Zusatzinformationen ausgewählt werden.

In einem Schritt 106 wird der automatisch mit den Zusatzinformationen angereicherte Datenstrom, also beispielsweise der Video-Stream, an den Client 2 von dem Server 3 übermittelt. Es ist ebenso vorstellbar, dass der Server 3 einen anderen, für die Übermittlung derartiger Datenströme spezialisierten Server veranlasst, den Datenstrom an den Client 2 zu übermitteln.

In einem Schritt 107 verarbeitet der Client 2 den Datenstrom derart, dass die zusatzinformationen an den entsprechenden Positionen dem Benutzer dargestellt werden können. Nach der Verarbeitung des Datenstroms endet das Verfahren in einem Schritt 108.

Eine Vielzahl weiterer Ausführungsformen und Abwandlungen des erfindungsgemäßen Verfahrens sind vorstellbar. Beispielsweise kann die Identifizierung des Benutzers in dem Schritt 102 auch durch den Einsatz spezialisierter Identifizierungs-Server erfolgen. Hierbei kann der Identifizierungs-Server insbesondere auch als Profilserver ausgestaltet sein, dem die Profildatenbank 5 zugeordnet ist. In diesem Fall würde eine Identifizierung des Benutzers bzw. des Clients 2 folglich gegenüber dem Profilserver erfolgen. Eine Auswertung des Benutzerprofils in dem Schritt 103 könnte ebenfalls durch den Profilserver durchgeführt werden. Ein Ergebnis der Auswertung des Benutzerprofils könnte dann von dem Profilserver an den Server 3 übermittelt werden. Insbesondere könnte eine Auswertung des Benutzerprofils auch in Abhängigkeit der Art des angeforderten Datenstroms erfolgen.

Insbesondere kann die Reihenfolge einzelner Schritte, beispielsweise der Schritte 102 bis 105, verändert werden. Beispielsweise kann zunächst in Abhängigkeit der Auswertung des Benutzerprofils die Auswahl der Zusatzinformation erfolgen. In Abhängigkeit von der ausgewählten Zusatzinformation kann dann eine Position innerhalb des Datenstroms ermittelt werden, in der diese Zusatzinformation dargestellt werden soll. Hierbei kann die Anzeige der Zusatzinformation in einer Umgebung erfolgen, die thematisch mit der Zusatzinformation zusammenhängt,

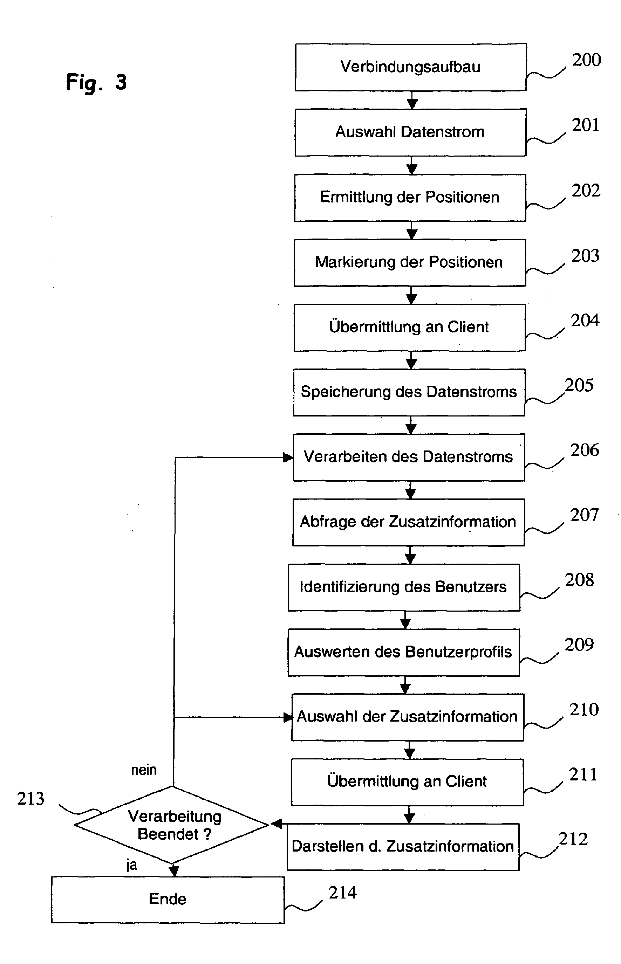

In Fig. 3 ist eine weitere Ausführungsform des erfindungsgemäßen Verfahrens dargestellt. Das Verfahren beginnt in einem Schritt 200 dadurch, dass eine Verbindung von dem Client 2 zu dem Server 3 aufgebaut wird.

In einem Schritt 201 erfolgt die Anforderung eines Datenstroms, analog zu dem in Fig. 2 dargestellten Schritt 101.

In einem Schritt 202 erfolgt zunächst die Ermittlung einer Position bzw. die Ermittlung von mehreren Positionen innerhalb des Datenstroms.

In einem Schritt 203 werden die ermittelten Positionen in geeigneter Weise markiert. Dies kann beispielsweise dadurch geschehen, dass eine Liste mit den Positionen, beispielsweise in zeitlicher Abhängigkeit, geführt wird. Es ist ferner vorstellbar, spezielle Daten in den Datenstrom zu integrieren, die den Beginn und/oder das Ende einer derartigen Position markieren.

In einem Schritt 204 wird der Datenstrom zusammen mit den Positionen an den Client 2 übermittelt und in einem Schritt 205 zwischengespeichert. Beispielsweise kann der Datenstrom ein oder mehrere Musikstücke oder ein Videofilm sein, der zunächst durch den Client 2 von dem Server 3 heruntergeladen und beispielsweise auf einer dem client 2 zugeordneten Festplatte abgespeichert wird.

In einem Schritt 206 wird der zwischengespeicherte Datenstrom durch den Client 2 verarbeitet. Dies kann beispielsweise durch den Aufruf der abgespeicherten Datei und den Einsatz einer geeigneten Software erfolgen. Es ist insbesondere auch vorstellbar, den zwischengespeicherten Datenstrom zeitversetzt zu verarbeiten, also bereits mit der Verarbeitung zu beginnen, während der Datenstrom noch heruntergeladen wird.

In einem Schritt 207 wird automatisch eine Verbindung von dem Client 2 zu dem Server 3 aufgebaut. Dies kann beispielsweise zu Beginn der Verarbeitung des Datenstroms durch den Client 2 erfolgen. Es ist ebenso vorstellbar, dass eine Verbindungsaufnahme erst bei Erreichen einer der markierten Positionen oder bei jeder einzelnen der markierten Positionen erfolgt.

In einem Schritt 208 erfolgt eine Identifizierung des Benutzers und in einem Schritt 209 eine Auswertung des Benutzerprofils, beispielsweise analog zu den in Fig. 2 dargestellten Schritten 102 und 103.

In einem Schritt 210 wird eine Zusatzinformation ausgewählt und in einem Schritt 211 an den Client 2 übermittelt.

In einem Schritt 212 wird die übermittelte Zusatzinformation dann an der vorbestimmten Position bzw. unmittelbar verarbeitet, beispielsweise dadurch, dass die Zusatzinformation dem Benutzer mittels des Clients 2 oder mittels eines weiteren, dem Benutzer zugeordneten Clients, angezeigt wird.

In einem Schritt 213 wird überprüft, ob es noch eine weitere Position innerhalb des Datenstroms gibt bzw. ob die Verarbeitung des Datenstroms noch nicht abgebrochen ist. Ist dies der Fall, so wird beispielsweise zu dem Schritt 206, 207 oder zu dem Schritt 210 zurückverzweigt. Gibt es keine derartige Position mehr bzw. wird die Verarbeitung des Datenstroms abgebrochen, so endet das Verfahren in einem Schritt 214.

Auch hier sind eine Vielzahl weiterer Ausführungsformen bzw. Varianten vorstellbar. Beispielsweise kann der Datenstrom von dem Client 2, nachdem er auf diesem abgespeichert wurde, an einen anderen Client übermittelt und von diesem verarbeitet werden. Hierbei kann der andere Client demselben Benutzer zugeordnet sein, dem auch der Client 2 zugeordnet ist. Es ist aber ebenso gut vorstellbar, dass der andere Client einem anderen Benutzer zugeordnet ist. Mittels des erfindungsgemäßen Verfahrens wäre dann dennoch die Übermittlung von relevanten Zusatzinformationen an den anderen Benutzer möglich, da eine Identifizierung des Benutzers und Auswertung des Benutzerprofils in den Schritten 208 und 209 in Abhängigkeit des aktuellen Benutzers des anderen Clients bzw. des anderen Clients selbst, auf dem eine Verarbeitung des Datenstroms durchgeführt wird, erfolgt.

Es ist ferner vorstellbar, dass die Zusatzinformation nicht an den Client 2, sondern an einen anderen dem Benutzer zugeordneten Client übermittelt wird. Beispielsweise kann während der Benutzer mittels des Clients 2 einen Video ansieht, an den markierten Positionen eine Textnachricht in Form einer sogenannten SMS oder einer email an ein dem Benutzer zugeordnetes mobiles Telekommunikationsgerät übermittelt werden. Es ist insbesondere vorstellbar, dass die Zusatzinformation auf dem Client 2 mittels einer anderen Software, beispielsweise einem Browser, dargestellt wird, als die Software 4, mittels derer der Datenstrom verarbeitet wird. Ferner kann die Zusatzinformation in einem anderen Datenformat übermittelt werden, als der Datenstrom.

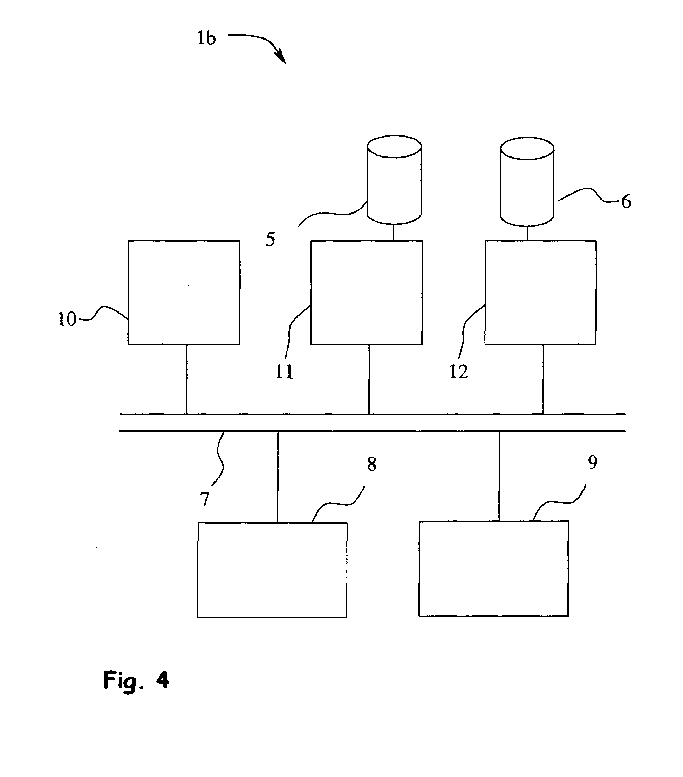

In Fig. 4 ist ein Client-Server-System 1b dargestellt, das einen ersten Client 8 und einen zweiten Client 9 umfasst. Der erste Client 8 und der zweite Client 9 sind an ein Kommunikationsnetzwerk, beispielsweise das Internet 7, angeschlossen. Hierbei kann beispielsweise der erste Client 8 und/oder der zweite Client 9 mittels einer drahtlosen Verbindung an das Internet 7 angeschlossen sein. Insbesondere kann der erste Client 8 und/oder der zweite Client 9 als ein mobiles Telekommunikationsgerät ausgestaltet sein.

Das Client-Server-System 1b weist ferner einen Voice-over-IP-Server (VoIP-Server) 10, einen Profilserver 11 und einen Informationsserver 12 auf. Dem Profilserver 11 ist eine Profildatenbank 5 und dem Informationsserver 12 ist eine Zusatzinformationsdatenbank 6 zugeordnet. Der VoIP-Server 10, der Profilserver 11 und der Informationsserver 12 sind ebenfalls an das Internet 7 angeschlossen, bzw. mit diesem verbindbar.

Voice-over-IP ist eine Technik, die die Übertragung von Sprachdaten über das dem Internet 7 zugrundeliegende Internet-Protokoll (IP) ermöglicht und damit insbesondere die Realisierung eines Telefongesprächs mittels des Internets erlaubt. Hierbei können sowohl der erste Client 8 als auch der zweite Client 9 als mobiles Telekommunikationsgerät, als Personal Computer, als Notebook oder als Festnetztelefon ausgestaltet sein.

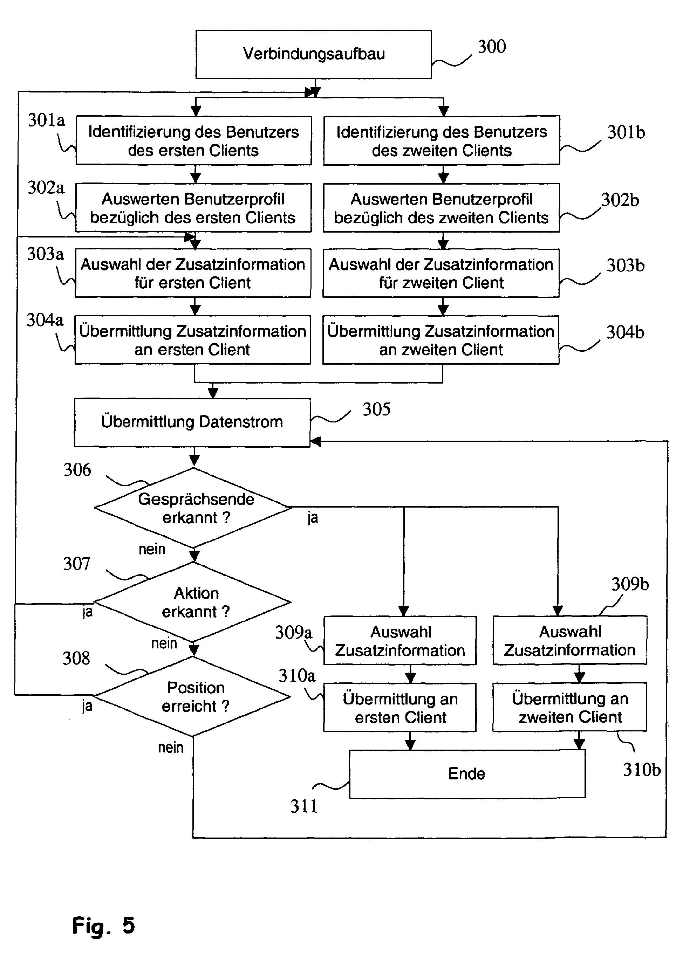

In Fig. 5 ist eine Ausführungsform des erfindungsgemäßen Verfahrens dargestellt, wie es beispielsweise auf dem Client-Server-System 1b ausgeführt werden könnte.

Das Verfahren beginnt in einem Schritt 300, in dem von dem ersten Client 8 ein Verbindungsaufbau für die Durchführung eines Telefongesprächs mit dem zweiten Client 9 eingeleitet wird. Hierbei wählt ein Benutzer, dem der erste Client 8 zugeordnet ist, beispielsweise eine dem zweiten Client 9 zugeordnete Telefonnummer. Diese wird durch eine auf dem ersten Client 8 ablaufende Software dahingehend interpretiert, dass zunächst über das Internet 7 eine Verbindung zu dem VoIP-Server 10 aufgebaut wird. Der VoIP-Server 10 kann beispielsweise ein sogenannter Internet-Provider sein, der dem ersten Client 8 den Zugang zu dem Internet ermöglicht.

In einem Schritt 301a erfolgt eine Identifizierung des Benutzers des ersten Clients 8. Dies kann beispielsweise dadurch geschehen, dass der erste Client 8 automatisch die diesem zugeordnete Rufnummer an den VoIP-Server 10 übermittelt. Es ist ebenso gut vorstellbar, dass eine dem Benutzer bzw. dem ersten Client 8 zugeordnete Kennung, beispielsweise ein Cookie oder eine sogenannte user-id automatisch an den Profilserver 11 übermittelt wird.

In einem Schritt 302a erfolgt eine Identifizierung und Auswertung des dem Benutzer zugeordneten Benutzerprofils. In einem Schritt 303a erfolgt die Auswahl einer Zusatzinformation. Die Auswahl kann hierbei analog zu den oben beschrieben Verfahren durchgeführt werden. Insbesondere können hierzu mehrere der oben genannten Merkmale eingesetzt werden, wobei die einzelnen Merkmale beispielsweise gewichtet sind. Eine Auswahl kann dann beispielsweise mittels bekannter Verfahren aus der künstlichen Intelligenz, beispielsweise eines Expertensystems, erfolgen.

In einem Schritt 304a wird die ausgewählte Zusatzinformation an den ersten Client 8 übermittelt.

Es ist vorstellbar, dass parallel hierzu eine Zusatzinformation für den zweiten Gesprächspartner, folglich für den zweiten Client 9, ausgewählt wird. Hierzu wird in einem Schritt 301b der Benutzer des zweiten Clients 9 bzw. der zweite Client 9 identifiziert, in einem Schritt 302b ein diesem Benutzer zugeordnetes Benutzerprofil ausgewählt, in einem Schritt 303b eine Zusatzinformation ausgewählt und in einem Schritt 304b an den zweiten Client 9 übermittelt.

Die Schritte 301a bis 304a können insbesondere während des Aufbaus einer VoIP-Verbindung von dem ersten Client 8 zu dem zweiten Client 9 durchgeführt werden. Hierbei kann folglich dem ersten Client 8 eine für den Benutzer des ersten Clients 8 relevante Zusatzinformation übermittelt werden. Der an den ersten Client 8 übermittelte Datenstrom sind hierbei die Sprachdaten, die nach einer aufgebauten Verbindung zu dem zweiten Client 9 von diesem an den ersten Client 8 übermittelt werden. Hierbei wird als zumindest eine Position eine Position ganz am Anfang des Datenstroms ausgewählt. Die Position wird folglich in Abhängigkeit von der Art des Datenstroms ausgewählt.

Durch die Schritte 301b bis 304b ist es folglich möglich, dem Empfänger des Datenstroms, der von dem ersten Client 8 an den zweiten Client 9 übermittelt wird, ebenfalls eine Zusatzinformation beispielsweise zu Beginn des Datenstroms anzuzeigen. Hierbei ist die jeweils übermittelte Zusatzinformation in Abhängigkeit des jeweiligen Empfängers der Zusatzinformation personalisiert, so dass damit eine möglichst hohe Relevanz für den jeweiligen Empfänger der Zusatzinformation erreicht wird.

In einem Schritt 305 wird die eigentliche Internet-Telefonie durchgeführt. Hierbei werden folglich Datenströme von dem ersten Client 8 zu dem zweiten Client 9 und von dem zweiten Client 9 zu dem ersten Client 8 übermittelt.

In einem Schritt 306 wird geprüft, ob das Gespräch beendet wurde. Ist dies nicht der Fall, so wird in einem Schritt 307 geprüft, ob eine vorgebbare Aktion von dem ersten Client 8 oder dem zweiten Client 9 durchgeführt wurde.

Eine derartige vorgebbare Aktion kann beispielsweise das Einreihen des Gesprächswunschs von dem ersten Client 8 in eine Warteschleife des zweiten Clients 9 sein. Während dieser Wartezeit kann mittels des erfindungsgemäßen Verfahrens dem ersten Client 9 relevante Zusatzinformation dargestellt werden.

Eine vorgebbare Aktion kann beispielsweise auch eine aktivierte Mailbox des zweiten Clients 9 sein, die den Anruf des ersten Clients 8 entgegennimmt. Hierbei kann beispielsweise vor oder nach Gesprächsende an die Mailbox des zweiten Clients 9 eine Zusatzinformation übermittelt werden.

Eine Aktion kann ferner das sogenannte Halten oder Parken eines Gesprächs sein. Während einer derartigen Unterbrechung des Gesprächs kann mittels des erfindungsgemäßen Verfahrens dem Benutzer des ersten Clients 8 und/oder dem Benutzer des zweiten Clients 9 eine Zusatzinformation übermittelt werden, die von möglichst hoher Relevanz für den jeweiligen Benutzer ist.

Wird eine derartige Aktion erkannt, dann wird zur Übermittlung der Zusatzinformation von dem Schritt 307 zu den Schritten 301a bzw. 301b oder 303a bzw. 303b verzweigt.

Wird keine Aktion erkannt, wird in einem Schritt 308 geprüft, ob eine vorgebbare Position innerhalb des Datenstroms erreicht ist. Eine derartige Position kann beispielsweise in Abhängigkeit einer Gesprächsdauer ermittelt werden. Ist dies der Fall, kann ebenfalls wieder zu den oben genannten Schritten verzweigt werden. Ist dies nicht der Fall, so wird in dem Schritt 305 der Datenstrom weiter übermittelt.

Wurde in dem Schritt 306 das Gesprächsende erkannt, so wird zu dem Schritt 309a und parallel hierzu zu dem Schritt 309b verzweigt. Hierbei wird analog zu den Schritten 303a bzw. 303b eine Zusatzinformation ausgewählt und in den Schritten 310a bzw. 310b an den ersten Client 8 bzw. den zweiten Client 9 übermittelt und dem jeweiligen Benutzer angezeigt.

Das in Figur 5 beispielhaft dargestellte Verfahren endet in einem Schritt 311.

Auch bei dem in Figur 5 dargestellten Verfahren ist eine Vielzahl weiterer Ausführungsformen bzw. Varianten denkbar. Insbesondere kann vorgesehen sein, eine Zusatzinformation nur an den ersten Client 8 oder nur den zweiten Client 9 zu übermitteln, also entweder nur die Schritte 301a bis 304a oder nur die Schritte 301b bis 304b auszuführen.

Ferner ist es vorstellbar, zur Auswahl der Zusatzinformation weitere Eigenschaften, beispielsweise eine aktuelle Tageszeit oder Jahreszeit sowie beispielsweise einen Wohnort des Benutzers zu berücksichtigen.

## Patentansprüche

1. Verfahren zur Auswahl und Darstellung mindestens einer Zusatzinformation in Abhängigkeit von einem von einem Server (3) an einen Client (2) übermittelbaren Datenstrom, **dadurch gekennzeichnet, dass**
- eine Position bezüglich des Datenstroms bestimmt wird;
- ein dem Client (2) zugeordnetes Profil ausgewertet wird;
- in Abhängigkeit von der Auswertung des Profils die mindestens eine Zusatzinformation ausgewählt wird und
- der Datenstrom derart von dem Client (2) verarbeitet wird, dass die ausgewählte Zusatzinformation in Abhängigkeit von der bestimmten Position dargestellt wird.

2. Verfahren nach Anspruch 1, **dadurch gekennzeichnet, dass** vor oder während der Übermittlung des Datenstroms an den Client (2) die Zusatzinformation ausgewählt wird, die Position bestimmt wird, die ausgewählte Zusatzinformation in die bestimmte Position bezüglich des Datenstroms eingefügt wird und der Datenstrom an den Client (2) übertragen wird.

3. Verfahren nach Anspruch 1, **dadurch gekennzeichnet, dass** der Datenstrom vor der Verarbeitung zwischengespeichert wird und
- vor der Übermittlung des Datenstroms die Zusatzinformation ausgewählt und der vorgesehenen Position zugewiesen wird;
- vor der Übermittlung des Datenstroms die Position ermittelt wird und die Zusatzinformation erst während der Verarbeitung des Datenstroms ausgewählt und an den Client (2) übermittelt wird;
- vor der Übermittlung des Datenstroms die Zusatzinformation ausgewählt wird und die Position erst während der Verarbeitung des Datenstroms bestimmt wird oder
- während der Verarbeitung des Datenstroms durch den Client (2) die Bestimmung der Position und die Auswahl und Übermittlung der Zusatzinformation an den Client (2) erfolgt.

4. Verfahren nach einem der vorangehenden Ansprüche, **dadurch gekennzeichnet, dass** die Zusatzinformation ausgewählt wird in Abhängigkeit von
- einer Eigenschaft des Datenstroms;
- einer Bewertung der zur Auswahl stehenden Zusatzinformationen;
- einer Eigenschaft der bestimmten Position und/oder
- eine aktuelle Tageszeit oder Jahreszeit.

5. Verfahren nach einem der vorangehenden Ansprüche, **dadurch gekennzeichnet, dass** die Position bestimmt wird in Abhängigkeit von
- dem Profil;
- einer Aktion eines Benutzers;
- einer Eigenschaft des Datenstroms;
- einer Eigenschaft der ausgewählten Zusatzinformation und/oder
- eine aktuelle Tageszeit oder Jahreszeit.

6. Verfahren nach einem der vorangehenden Ansprüche, **dadurch gekennzeichnet, dass** das Profil eine Profilinformation enthält bezüglich
- einer Eigenschaft eines angeforderten oder übermittelten Datenstroms;
- eines bestellten oder gekauften Produkts;
- eines nicht gekauften Produkts;
- des Kaufverhaltens des Benutzers bei einem Online-Shop;
- mindestens eines dem Benutzer zugeordneten personenbezogenen Datums;
- mindestens eines von dem Benutzer oder dem Benutzer zugeordneten Clients (2) an eine Suchmaschine oder eine Produktsuchmaschine übermittelten Suchbegriffs und/oder
- des Verhaltens des Benutzers bezüglich mindestens einer diesem dargestellten Zusatzinformation.

7. Verfahren nach einem der vorangehenden Ansprüche, **dadurch gekennzeichnet, dass** der Datenstrom Videodaten umfasst und
- bei der Darstellung der Videodaten die Zusatzinformation die Videoinformation zumindest teilweise überlagernd dargestellt wird;
- die Darstellung der Videodaten an der bestimmten Position unterbrochen wird und eine Darstellung der Zusatzinformation erfolgt oder
- die Zusatzinformation auf einem separaten Medium dargestellt wird.

8. Verfahren nach einem der vorangehenden Ansprüche, **dadurch gekennzeichnet, dass** der Datenstrom Musikdaten umfasst und die Zusatzinformation vor oder nach einem Musiktitel eingeblendet wird, wobei der Musiktitel in Abhängigkeit von dem Profil oder in Abhängigkeit von einer Eigenschaft der Zusatzinformation ausgewählt wird.

9. Verfahren nach einem der vorangehenden Ansprüche, **dadurch gekennzeichnet, dass** der Datenstrom über das Internet übertragen wird.

10. Verfahren nach einem der vorangehenden Ansprüche, **dadurch gekennzeichnet, dass** der Datenstrom die im Zuge des Aufbaus oder Abbaus einer Internet-Telefonie-Verbindung oder die während einer aufgebauten Internet-Telefonie-Verbindung zwischen den Gesprächspartnern übertragenen Gesprächsdaten umfasst und die Zusatzinformation in Abhängigkeit des dem jeweiligen Empfänger des Datenstroms zugeordneten Profils ausgewählt wird.

11. Verfahren nach einem der vorangehenden Ansprüche, **dadurch gekennzeichnet, dass** eine Reaktion des Benutzers oder des Clients (2) auf die Zusatzinformation erfasst wird und in Abhängigkeit von einer Auswertung der Reaktion eine Bewertung der Zusatzinformation durchgeführt wird.

12. Verfahren nach einem der vorangehenden Ansprüche, **dadurch gekennzeichnet, dass** eine Reaktion des Benutzers oder des Clients (2) auf die Zusatzinformation erfasst wird und in Abhängigkeit von einer Auswertung der Reaktion eine Aktualisierung des Profils durchgeführt wird.

13. Client-Server System (1a; 1b), das einen mit einem Kommunikationsnetzwerk verbundenen Client (2) und einen mit dem Kommunikationsnetzwerk verbundenen Server (3) umfasst, **dadurch gekennzeichnet, dass** das Client-Server System (1a; 1b) Mittel zur Durchführung eines Verfahrens nach einem der Ansprüche 1 bis 12 aufweist.

14. Computerprogramm, das auf einem Client-Server System (1a; 1b) auflauffähig ist, **dadurch gekennzeichnet, dass** ein Verfahren nach einem der Ansprüche 1 bis 12 ausgeführt wird, wenn das Computerprogramm auf dem Client-Server System (1a; 1b) abläuft.

15. Computerprogramm nach Anspruch 14, **dadurch gekennzeichnet, dass** das Computerprogramm auf einem Speicherelement abgespeichert ist, wobei das Speicherelement als ein Read-Only-Memory (ROM), ein Random-Access-Memory (RAM), eine Festplatte (hard disc), eine Compact Disc (CD), eine Digital Versatile Disc (DVD) oder mindestens ein mindestens einer Komponente des Client-Server Systems (1a; 1b) zugeordneter Speicherbereich ausgebildet ist.

## Geänderte Patentansprüche

### Geänderte Patentansprüche gemäss Regel 86(2) EPÜ.

**1.** Verfahren zur Auswahl und Darstellung mindestens einer Zusatzinformation in Abhängigkeit von einem von einem Server (3) an einen Client (2) übermittelbaren Datenstrom, wobei
- eine Position bezüglich des Datenstroms bestimmt wird,
- ein dem Client (2) zugeordnetes Profil ausgewertet wird,
- in Abhängigkeit von der Auswertung des Profils die mindestens eine Zusatzinformation ausgewählt wird und
- der Datenstrom derart von dem Client (2) verarbeitet wird, dass die ausgewählte Zusatzinformation in Abhängigkeit von der bestimmten Position dargestellt wird,
**dadurch gekennzeichnet, dass** das Profil eine Profilinformation enthält bezüglich mindestens eines von dem Benutzer oder dem Benutzer zugeordneten Clients (2) an eine Suchmaschine oder eine Produktsuchmaschine übermittelten Suchbegriffs und die Zusatzinformation in Abhängigkeit von einer Auswertung des Suchbegriffs ausgewählt wird.

**2.** Verfahren nach Anspruch 1, **dadurch gekennzeichnet, dass** die Zusatzinformation in Abhängigkeit von einer Eigenschaft der bestimmten Position ausgewählt wird.

**3.** Verfahren nach Anspruch 1 oder 2, **dadurch gekennzeichnet, dass** vor oder während der Übermittlung des Datenstroms an den Client (2) die Zusatzinformation ausgewählt wird, die Position bestimmt wird, die ausgewählte Zusatzinformation in die bestimmte Position bezüglich des Datenstroms eingefügt wird und der Datenstrom an den Client (2) übertragen wird.

**4.** Verfahren nach Anspruch 1, **dadurch gekennzeichnet, dass** der Datenstrom vor der Verarbeitung zwischengespeichert wird und
- vor der Übermittlung des Datenstroms die Zusatzinformation ausgewählt und der vorgesehenen Position zugewiesen wird;
- vor der Übermittlung des Datenstroms die Position ermittelt wird und die Zusatzinformation erst während der Verarbeitung des Datenstroms ausgewählt und an den Client (2) übermittelt wird;
- vor der Übermittlung des Datenstroms die Zusatzinformation ausgewählt wird und die Position erst während der Verarbeitung des Datenstroms bestimmt wird oder
- während der Verarbeitung des Datenstroms durch den Client (2) die Bestimmung der Position und die Auswahl und Übermittlung der Zusatzinformation an den Client (2) erfolgt.

**5.** Verfahren nach einem der vorangehenden Ansprüche, **dadurch gekennzeichnet, dass** die Zusatzinformation ausgewählt wird in Abhängigkeit von
- einer Eigenschaft des Datenstroms;
- einer Bewertung der zur Auswahl stehenden Zusatzinformationen und/oder
- einer aktuellen Tageszeit oder Jahreszeit.

**6.** Verfahren nach einem der vorangehenden Ansprüche, **dadurch gekennzeichnet, dass** die Position bestimmt wird in Abhängigkeit von
- dem Profil;
- einer Aktion eines Benutzers;
- einer Eigenschaft des Datenstroms;
- einer Eigenschaft der ausgewählten Zusatzinformation und/oder
- eine aktuelle Tageszeit oder Jahreszeit.

**7.** Verfahren nach einem der vorangehenden Ansprüche, **dadurch gekennzeichnet, dass** das Profil eine Profilinformation enthält bezüglich
- einer Eigenschaft eines angeforderten oder übermittelten Datenstroms;
- eines bestellten oder gekauften Produkts;
- eines nicht gekauften Produkts;
- des Kaufverhaltens des Benutzers bei einem Online-Shop;
- mindestens eines dem Benutzer zugeordneten personenbezogenen Datums und/oder
- des Verhaltens des Benutzers bezüglich mindestens einer diesem dargestellten Zusatzinformation.

**8.** Verfahren nach einem der vorangehenden Ansprüche, **dadurch gekennzeichnet, dass** der Datenstrom Videodaten umfasst und
- bei der Darstellung der Videodaten die Zusatzinformation und die Videoinformation zumindest teilweise überlagernd dargestellt werden;
- die Darstellung der Videodaten an der bestimmten Position unterbrochen wird und eine Darstellung der Zusatzinformation erfolgt oder
- die Zusatzinformation auf einem anderen Medium als der Datenstrom dargestellt wird.

**9.** Verfahren nach einem der vorangehenden Ansprüche, **dadurch gekennzeichnet, dass** der Datenstrom Musikdaten umfasst und die Zusatzinformation vor oder nach einem Musiktitel eingeblendet wird, wobei der Musiktitel in Abhängigkeit von dem Profil oder in Abhängigkeit von einer Eigenschaft der Zusatzinformation ausgewählt wird.

**10.** Verfahren nach einem der vorangehenden Ansprüche, **dadurch gekennzeichnet, dass** der Datenstrom über das Internet übertragen wird.

**11.** Verfahren nach einem der vorangehenden Ansprüche, **dadurch gekennzeichnet, dass** der Datenstrom die im Zuge des Aufbaus oder Abbaus einer Internet-Telefonie-Verbindung oder die während einer aufgebauten Internet-Telefonie-Verbindung zwischen den Gesprächspartnern übertragenen Gesprächsdaten umfasst und die Zusatzinformation in Abhängigkeit des dem jeweiligen Empfänger des Datenstroms zugeordneten Profils ausgewählt wird.

**12.** Verfahren nach einem der vorangehenden Ansprüche, **dadurch gekennzeichnet, dass** eine Reaktion des Benutzers oder des Clients (2) auf die Zusatzinformation erfasst wird und in Abhängigkeit von einer Auswertung der Reaktion eine Bewertung der Zusatzinformation durchgeführt wird.

**13.** Verfahren nach einem der vorangehenden Ansprüche, **dadurch gekennzeichnet, dass** eine Reaktion des Benutzers oder des Clients (2) auf die Zusatzinformation erfasst wird und in Abhängigkeit von einer Auswertung der Reaktion eine Aktualisierung des Profils durchgeführt wird.

**14.** Client-Server System (1a; 1b), das einen mit einem Kommunikationsnetzwerk verbundenen Client (2) und einen mit dem Kommunikationsnetzwerk verbundenen Server (3) umfasst, **dadurch gekennzeichnet, dass** das Client-Server System (1a; 1b) Mittel zur Durchführung eines Verfahrens nach einem der Ansprüche 1 bis 13 aufweist.

**15.** Computerprogramm, das auf einem Client-Server System (1a; 1b) auflauffähig ist, **dadurch gekennzeichnet, dass** ein Verfahren nach einem der Ansprüche 1 bis 13 ausgeführt wird, wenn das Computerprogramm auf dem Client-Server System (1a; 1b) abläuft.

**16.** Computerprogramm nach Anspruch 15, **dadurch gekennzeichnet, dass** das Computerprogramm auf einem Speicherelement abgespeichert ist, wobei das Speicherelement als ein Read-Only-Memory (ROM), ein Random-Access-Memory (RAM), eine Festplatte (hard disc), eine Compact Disc (CD), eine Digital Versatile Disc (DVD) oder mindestens ein mindestens einer Komponente des Client-Server Systems (1a; 1b) zugeordneter Speicherbereich ausgebildet ist.
